# EUROPEAN PATENT APPLICATION

(11) **EP 2 629 222 A1**
(43) Date of publication of application: **21.08.2013**
(21) Application number: 13155899.1
(22) Date of filing: 20.02.2013
(51) Int. Cl.: G06F 21/00

(54) **Portable, protected data storage device**

(30) Priority: 20.02.2012 IT MI20120253
(71) Applicant: E.T.G. Elettronica di G. Terlisio, 20024 Garbagnate Milanese (Milano) (IT)
(72) Inventor: Terlisio, Gianpaolo, 20030 Senago (Milano) (IT)
(74) Representative: Ferrari, Barbara

(57) **Abstract**

Herein described is a portable data storage device (1) comprising at least one mass memory (2) and a connection interface (4) with the outside. The portable data storage device (1) further comprises at least one microprocessor (3) connected to the mass memory (2) for the management of communications with the mass memory (2) or with at least a protected portion thereof and to the connection interface (4) as well as at least one access authorization circuit (5) in turn connected to the microprocessor (3) and associated with an access key of the portable data storage device (1), the microprocessor (3) also comprising a program for the protection of data, data transmission to and from the mass memory (2) or its protected portion being under the total control of the microprocessor (3), in turn activated through the access authorization circuit (5) and authorized by the program for the protection of data so as to make the portable data storage device (1) normally available for reading and/or writing.

## Description

### Field of application

The present invention refers to a portable data storage device.

The invention particularly, but not exclusively, relates to a portable data storage device of the type which comprises at least one mass memory and the description that follows is provided with reference to this field of application with the sole purpose of simplifying the description thereof.

### Prior art

It is well known that, there are different types of portable data storage devices, which differ in terms of sizes, storage capacity, consumptions and power supply.

For example, the so-called USB flash drives or pen drives which are essentially portable mass memories of very small sizes, in particular usually a few centimetres long and having a width slightly longer than one centimetre, which are connected to a computer by means of a usual USB port are very common.

In particular, in a USB pen drive, data are stored in a memory, typically a NAND flash memory, contained therein. The storage capacity of such pen drive is thus solely limited by the density of the memory used therein and by a cost per megabyte which rapidly increases for high capacities.

Data transfer from the computer to a USB pen drive, and vice versa, is carried out according to a standard protocol referred to as "USB Mass Storage protocol", USB pen drive support drivers being normally included in the various operating systems by the major manufacturers, such as Windows, Mac OS X and Linux.

The recent popularity of USB pen drives is also due to the fact that the reading/writing speed of the Flash memory contained therein, initially very low and limited right due to the low pass-band of the USB interface

(equivalent to 12 Mbits/s in the 1.0 version), was recently increased and in the 2.0 version it corresponds to a 480 Mbits/s pass-band. Obviously, the writing speed does not depend solely on the used interface, but also on the type of Flash memory comprised in the USB pen drive.

Essentially, a USB pen drive thus comprises, besides a Flash memory, a USB connector and a USB protocol management chip. The pen drive is completed by a LED indicating the working status of the pen drive, as well as a possible switch for blocking the writing in the memory.

Due to the small sizes, the absence of moveable mechanisms (contrary to the common hard disks, which makes it very resistant), the ever-growing sizes of the memory useable therein and the interoperability thereof, the USB pen drive is becoming a favourite portable storage device preferred by an increasing number of consumers for data physical transfer.

Equally common are portable storage devices based on a hard disk, i.e. a mass memory device which uses one or more magnetic disks for storing data. In the non-portable form thereof, the hard disk is the mass memory device used in majority of the computers and also in other electronic devices, such as for example the digital video recorder, also referred to as PVR (acronym for "Personal Video Recorder") or DVR (acronym for "Digital Video Recorder").

A hard disk is basically constituted by one or more plates or disks in quick rotation, made of aluminium or glass, coated with ferromagnetic material and by two or more heads for each disk (arranged on both sides), which, during the operation "fly" to the distance of few tens of nanometres from the surface of the respective disk, thus reading and writing data. The head is held raised by the air moved by the rotation of the disk, indeed, which may exceed 15000 rpm.

The most modern hard disks have the capacity and performance extensively greater than those of the initial models, but the speed thereof in reading and writing data however remains various orders of magnitude below the performance of the random access memories (RAM and ROM) and the solid state components the computer is provided with.

In the portable version thereof, the hard disk is usually indicated as external, with the aim of highlighting that it is not the one housed within a computer. An external hard disk is a peripheral device which is used for storing any type of files and it is generally made up of a normal rigid disk, inserted into a case, provided with ports for connecting towards a computer, such as for example the USB, FireWires, SCSI, eSATA ports.

The diffusion of the portable data storage devices, in the form of USB pen drives or external hard disk, also lead to the sharp increase of problems tied to the safety and accessibility of the stored data, these problems having been always felt in the data storage, processing and transfer field. However, it should be observed that in the modern world 'information' often means 'money' and primary attention is paid to information safety and protection, in particular the stored data containing such information.

Data protection programs, in particular for protecting files, folders and entire unit of a computer are known and widely used. There are also alternatives of such programs which are capable of protecting single files or the entire Flash memory of a portable storage device such as an external hard disk or a USB pen drive.

Essentially, data protection programs combine the capacity of hiding and the capacity of encrypting data, usually using an access password. In particular, there are protection programs which allow hiding files, folders and local computer units from local users, including administrators, setting access rules for the files and disks as desired, preventing the deletion of specified files. Besides data, it is usually also possible to protect, using a password, the starting of a program and the uninstalling thereof. In other cases, the data protection program provides for showing and hiding folders, as well as setting unprotected trusted processes according to which a given program may work with the hidden data, but the users do not have access to the data.

The variety of data protection programs available in the market is accompanied by an equivalent diversified availability of tools conceived for "breaking into" protection programs so realized and allow reading the protected data too. Mainly, these tools substantially allow recovering or removing the password set for protecting data.

More recently, external hard disks provided with an electronic safety key of the hardware type have been introduced in the market, for example in form of a smart card, whose insertion into the hard disk allows activation thereof for reading and writing. In such case, it is obviously possible the use of solutions for duplicating or tampering such electronic key to read protected data.

The technical problem of the present invention is to provide a portable data storage device, having structural and functional features such to guarantee the protection of the data contained therein thus overcoming the limitations and drawbacks still affecting the devices made according to the prior art.

### Summary of the invention

The solution idea on which the present invention is based is to provide the portable storage device with an on board microprocessor able to manage all data transmission from and towards the mass memory, activated and authorized thanks to a combination of a protection program, in particular using a password, and an activation key.

According to such solution idea the technical problem is solved by a portable data storage device comprising at least one mass memory and a connection interface with the outside, **characterized in that** it comprises at least one microprocessor connected to said mass memory for the management of communications with said mass memory or with at least one protected portion thereof and to said connection interface as well as at least one access authorization circuit in turn connected to said microprocessor and associated with an access key of said portable data storage device, said microprocessor also comprising a program for the protection of data, data transmission to and from said mass memory or its protected portion being under the total control of said microprocessor, in turn activated through said access authorization circuit and authorized by said program for the protection of data so as to make said portable data storage device normally available for reading and/or writing.

More in particular, the invention comprises the following supplementary and optional features, taken alone or in combination one another, if needed.

According to an aspect of the invention, the access authorization circuit may be associated to an access key of the electronic and/or mechanical type.

According to such aspect of the invention, said access key may be of the electronic type and be selected from among a key of the transponder type, an RFID device, a microprocessor card.

According to another aspect of the invention, said program for the protection of data may be of the type having a password and said password may be entered by the user, by using the screen and the keyboard of a computer which said portable data storage device is connected to. In particular, such password can be an alphanumeric combination, for example with 10 digits and/or letters.

Furthermore, according to an aspect of the invention, said microprocessor may comprise a counter which takes into account the access attempts having been made and failed with said program for the protection of data and a locking system of the access to said mass memory or to its protected portion after a predefined number of attempts. Alternatively, the total erase of the mass memory could be considered upon exceeding the predefined number of attempts at the disposal of the user.

According to an aspect of the invention, the portable data storage device may further comprise at least one system control block coupled to a power supply block, in turn connected to a signalling block, also connected to said connection interface.

According to this aspect of the invention, said power supply block may comprise at least a first and a second buffer battery, said first buffer battery being capable of supplying said system control block and maintaining a control from said microprocessor to the access to said mass memory or to its protected portion also in absence of a connection with said second buffer battery. Thus, also a tampering action which leads to the interruption of the power supply to the portable data storage device does not overcome the protections guaranteed by the access authorization circuit and its access key and by the protection program and its password.

According to this aspect of the invention, said second buffer battery may be recharged by connecting to a USB port of a computer in which said portable data storage device is inserted either by means of an electrical power supply system or by means of an alternative power supply means.

Furthermore, according to another aspect of the invention, said signalling block may comprise at least one signalling led, capable of emitting light signals of different colours and types indicating different working conditions of said portable data storage device.

According to another aspect of the invention, said access authorization circuit may comprise a transceiver block associated to a reception block of said access key. In particular, a transceiver block of the UART type could be used, being associated to a transponder access key.

The portable data storage device may further comprise a programmable input/output block able to detect attempts of forced entry from the outside to said portable data storage device. Also in this case, a total erase of the mass memory could be considered, upon exceeding a predefined number of attempts.

According to this aspect of the invention, said programmable input/output block may comprise a system for controlling the temperature and a heater capable of preventing a misuse of the safety mechanism that is carried out by freezing or by heating said portable data storage device, said system for controlling the temperature carrying out a block of said portable data storage device in the event of exceeding a certain range of safety by the temperature. Alternatively, a total erase of the mass memory could be considered in case of exceeding the range of safety by the temperature.

According to another aspect of the invention, the portable data storage device may further comprise providing for the insertion of an external mass memory also in conditions of absence of connection towards a computer, the access to said external mass memory always being under the control of the microprocessor, with the enabling being provided by said access authorization circuit.

According to still another aspect of the invention, the portable data storage device may comprise a suitable container with anti-tamper mechanism.

In particular, according to this aspect of the invention, said anti-tamper mechanism may comprise a mechanism designated for detecting the mechanical opening of said container and/or an anti-drilling system.

Lastly, according to a further aspect of the invention, the portable data storage device may comprise at least one first fit for the connection with a power supply and a second fit for the connection with a computer, said second fit having a connection mode selected from among a USB, serial, parallel, SCSI, WI-FI, infrared and Bluetooth connection, other connections being also possible.

The characteristics and advantages of the portable storage device according to the invention will be evident from the description, outlined hereinafter, of an embodiment thereof provided by way of non-limiting example with reference to the annexed drawings.

### Brief description of the drawings

In such drawings:
- Figure 1 shows a working circuit diagram of a portable data storage device according to the invention;
- Figure 2 shows a working circuit diagram of an alternative embodiment of a portable data storage device according to the invention; and
- Figures 3A and 3B schematically show, in a front and rear view respectively, a portable data storage device according to the invention.

### Detailed description

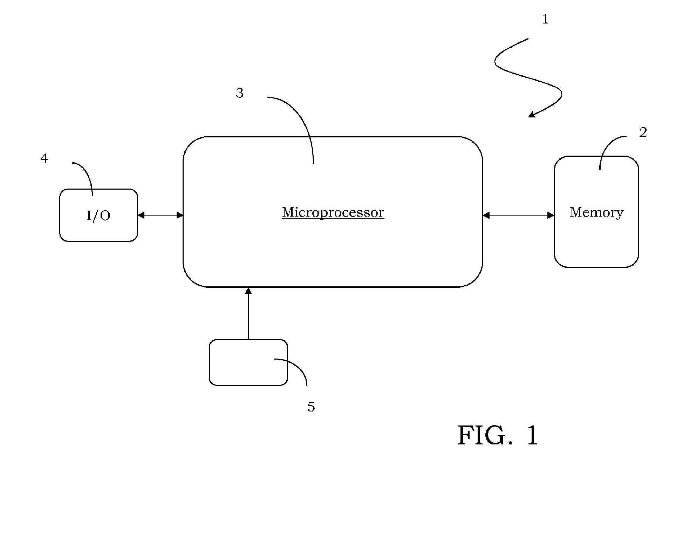

With reference to such figures, and in particular to Figure 1, a portable data storage device according to the invention is schematically indicated with 1.

In particular, Figure 1 shows a block diagram representing the working diagram of the portable data storage device 1. The portable data storage device 1 essentially comprises a mass memory 2, for example a Flash memory of the NAND type, connected in a bidirectional manner to a microprocessor 3 for the management of communications with the mass memory 2, in particular for the management of writing and reading data in the mass memory 2.

According to another aspect of the invention, it can be provided for that the microprocessor 3 manages the communications solely for a protected portion of the mass memory 2.

The microprocessor 3 is in turn connected in a bidirectional manner to a connection interface 4 with the outside of the portable data storage device 1, in particular a connector of the USB type for the connection with a USB port for example of a computer, as well as to an access authorization circuit 5, in particular associated to a so-called access key of the portable data storage device 1.

According to an aspect of the invention, data transmission from and towards the mass memory 2 or towards the protected portion thereof are under the total control of the microprocessor 3, in turn activated due to the access authorization circuit 5. In a preferred embodiment, the access authorization circuit 5 is associated to an electronic access key of the transponder type.

An electronic access key could be also provided in form of an RFID (acronym for "Radio Frequency IDentification") device or a microprocessor card. Furthermore, a mechanical access key could be used, being capable of triggering the access authorization circuit 5 and authorizing, with the presence thereof, the access to the microprocessor 3 and thus to the mass memory 2 or to the protected portion thereof.

According to an aspect of the invention, the access authorization circuit 5 enables the microprocessor 3, in turn provided with a suitable program for the protection of data, for example of the type having a password. In a preferred embodiment, the program for the protection of data requires an alphanumeric password comprising 10 digits and/or letters.

Practically, inserting an electronic or mechanical access key enables, through the access authorization circuit 5, access to the microprocessor 3 by the connection interface 4. At this point the microprocessor 3 executes the program for the protection of data stored therein and requests the user, using the screen and the keyboard of a computer which the portable data storage device 1 is connected to, to insert a password for access to the mass memory 2 or to the protected portion thereof. Only after the correct enabling using an access key and receiving the password, the portable data storage device 1 is normally available for reading and writing.

According to another aspect of the invention, it can be provided for that the microprocessor 3 uses the program for the protection of data solely for the protected portion thereof.

Furthermore, it can be provided for that the microprocessor 3 comprises a counter which counts the access attempts made and failed using the program for the protection of data and a system for blocking access to the mass memory 2 or to the protected portion thereof after a predefined number of attempts. In an embodiment, the microprocessor 3 provides for indicating to the user, when starting the program for the protection of data, the number of failed access attempts, giving the user the possibility of verifying possible attempts to access his protected data in the portable data storage device 1.

It could be considered that the microprocessor 3 triggers the erasing of the mass memory 2 or the protected portion thereof upon exceeding the number of predefined failed access attempts. According to another aspect of the invention, the microprocessor 3 disables access to the mass memory 2 or to the protected portion thereof after a predefined period of time of inactivity on the data contained therein, once again requiring the entry of the password for restoring the normal working for reading and/or writing the portable data storage device 1.

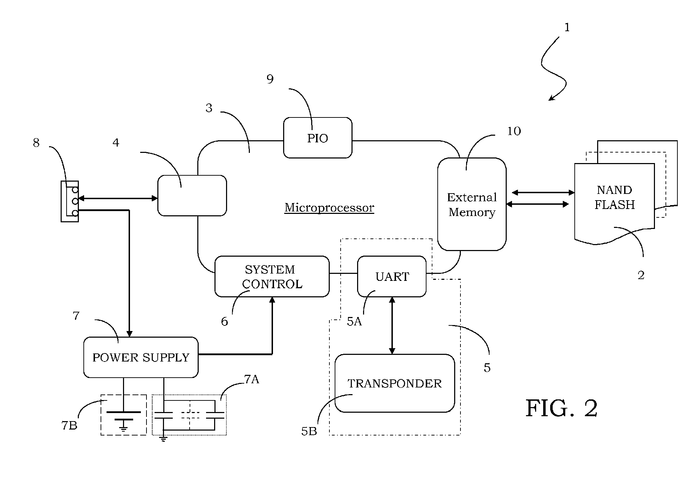

In a preferred embodiment, schematically illustrated in Figure 2, the portable data storage device 1 further comprises at least one system control block 6 coupled to a power supply block 7, in turn connected to a signalling block 8, also connected to the connection interface 4.

More in particular, the power supply block 7 comprises at least one first and one second buffer battery, respectively an internal one 7A and an external one 7B, the first buffer battery or internal battery 7A being capable of power supplying the system control block 6 and maintaining the control of the microprocessor 3 on the access to the mass memory 2 or to the protected portion thereof also in absence of connection with the second buffer battery or external battery 7B, which is in turn rechargeable in a known manner by connecting to a USB port of the computer which the portable data storage device 1 is inserted in. The external battery 7B may be also supplied by using an electrical power supply system, in particular specific for USB ports, or capable of using an alternative power source, such as a solar cells power supply system.

In order to increase the safety level guaranteed by the portable data storage device 1, it can be provided for that the first buffer battery or internal battery 7A cannot be replaced, except by the manufacturer. Furthermore, the presence of a self-restoring fuse as a protection of the power supply block 7 could be considered.

Moreover, the signalling block 8 comprises at least one signalling led, capable of emitting light signals of different colours and types, in particular fixed or blinking, such light signals indicating different working conditions of the portable data storage device 1 and in particular of the different blocks/components therein.

By way of example, The following combination of light signals for the signalling block 8 could be envisaged:
- a fixed red led, for signalling a low charge level of the second buffer battery or external battery 7B;
- a fixed yellow led, for indicating that the portable data storage device 1 is blocked in reading/writing even after inserting an access key;
- a blinking yellow led, for indicating possible attempts of entering the required password, in particular the number of blinking of such led corresponding to the number of attempts still available (which may also not be reset when the portable data storage device 1 is disconnected);
- a blinking green led, for signalling the presence of power supply and in particular the connection of the portable data storage device 1 to a USB port of a computer; and
- a fixed green led, for indicating a normal working condition of the portable data storage device 1, following the correct enabling by means of an access key and password entry.

However, several leds, of different colours and shapes could be used, as well as different combinations of the fixed and blinking light signals as indicated above.

According to an aspect of the invention, the access authorisation circuit 5 comprises a transceiver block 5A, in particular a UART block, acronym for "Universal Asynchronous Receiver-Transmitter", capable of converting a flow of data bits from a parallel format to an asynchronous serial format, and vice versa, associated to a reception block 5B of the access key, in particular an actual transponder block associated to a transponder access key, indeed.

Furthermore, the portable data storage device 1 comprises a programmable input/output block 9, in particular a PIO block, acronym for "Programmed Input/Output", capable of detecting attempts of forced access from outside. It can be provided for that the microprocessor 3 triggers the erasing of the mass memory 2 or the protected portion thereof in case of a single attempt of forced entry from outside or upon exceeding a given number of attempts.

In particular, the programmable input/output block 9 (PIO) of the portable data storage device 1 may comprise a system for controlling the temperature and a heater capable of preventing a misuse of the safety mechanism that is carried out by freezing or heating the portable data storage device 1, system for controlling the temperature carrying out a block of the portable data storage device 1 in the event of exceeding a certain range of safety by the temperature. In particular, it can be provided for that, in case of detection of a temperature exceeding the fixed limit values for the device, the system for controlling the temperature intervenes for preventing access to the data contained in the mass memory 2 of the portable data storage device 1. Also provided is a heating action within the portable data storage device 1 (in case of lowering the temperature) with the aim of allowing the device to complete the data protection operation. It can also be provided for that the microprocessor 3 provides for the erase of the mass memory 2 or the protected portion thereof in case of detection of a temperature exceeding the fixed limit values for the device.

Furthermore, such functionality could be excluded, by setting the portable data storage device 1, depending on the normal working conditions the device is intended for or according to the choice of the user.

Furthermore, the storage portable device 1, in a more advanced version, could comprise an arrangement for the entry of an external mass memory 10, for example a USB memory, in conditions of absence of connection towards a computer. Suitably, access to such external mass memory 10 is always under the control of the microprocessor 3, with the enabling provided by the circuit authorization access 5. In presence of an electronic or mechanical access key inserted in the transponder block 5B of the access authorization circuit 5, the portable data storage device 1 may be configured so as to automatically provide for entirely copying the data contained in the external mass memory 10 towards the mass memory 2, which is a memory inside the portable data storage device 1, or towards the protected portion thereof so as to enter such data in a protected environment.

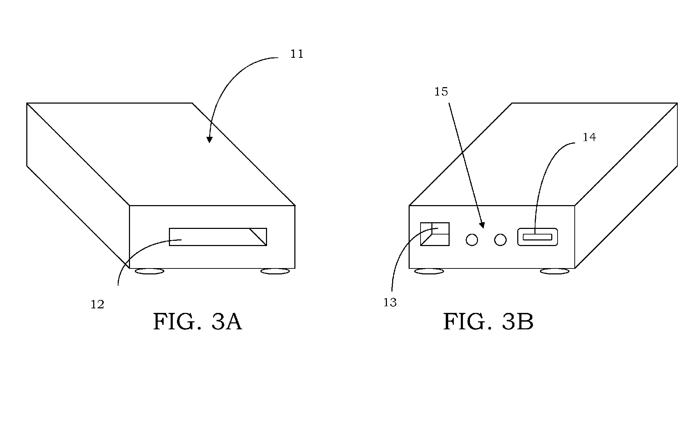

A portable data storage device 1 realized according to the invention is shown in Figures 3A and 3B. In particular, the portable data storage device 1 is provided with a suitable container or case 11, for example made of steel with anti-tamper mechanism. More in particular, the anti-tamper mechanism may comprise a tamper alert or any other mechanism suitable for detecting the mechanical opening of the container 11 and also an anti-drilling system.

The portable data storage device 1 also comprises, in a front portion thereof, as illustrated in Figure 3A, a slot 12 for inserting the access key, for example in form of a chip card or microprocessor. Shape and dimensions of this slot 12 may vary depending on the access key provided for the portable data storage device 1.

As previously outlined, different types of access keys could be used, including but not exclusively chip cards or microprocessors, magnetic cards, mechanical keys, USB pen drives and even a connection using a mobile phone such as a Bluetooth.

The portable data storage device 1 further comprises, in a rear portion thereof, as illustrated in Figure 3B, at least one first fit 13 for the connection with a power supply (not shown) and a second fit 14 for the connection with a computer.

In particular, also for this second fit 14, other connection modes could be considered, including but not exclusively USB, serial, parallel, SCSI, WI-FI, infrared connections and even connections of the Bluetooth type. In particular, advantageously according to the invention, any type of connection may be used for the portable data storage device 1, both of the type currently available in the market and any possible new types, such connection being simply integrated in the container 11 and connected to the connection interface 4.

Obviously, the fits 13 and 14 chosen for the portable data storage device 1 may be of different types and in a number that is different from two.

Furthermore, the portable data storage device 1 comprises, for example in the rear portion thereof illustrated in Figure 3B, a set of signalling leds 15, in the example of the figure in a number of two and having different colours.

A description of the working of the device according to the invention is now provided. It is obviously an example of how such portable data storage device 1 can work given by way of example.

In particular, the portable data storage device 1 is initially connected to a USB port of a computer. Thus, the user is required to insert the access key, for example a transponder key.

At this point, on the computer to which the portable data storage device 1 is connected there appears an access code or password request. Such code can be customized/modified by the user and it may have an initial value entirely made up of zeros.

In particular, the writing of the access code or password may occur with a program comprising an algorithm which also involves the code as detected by the access key, for example the transponder key.

A function that controls the duplicate of the transponder code after entering the password could be considered, for example providing for a maximum number of duplicates for each password *a priori.*

A total erase without the possibility of recovering the data contained in the mass memory 2 or in the protected portion thereof could be also considered after a predefined number of erroneous attempts of entering the password. Furthermore, such erase may be provided for after each single tampering or break-in attempt which involves a communication port with the connection interface 4.

In this case, after such total erase of the mass memory 2 or the protected portion thereof, a restoration of the portable data storage device 1 for use thereof as a blank product could be provided.

Lastly, it can be provided for a displaying of the status of the battery of the portable data storage device 1, for example by means of a screenshot on the computer which the portable data storage device 1 is connected to.

Substantially, the portable data storage device 1 is capable of implementing a data reading/writing method in a safe manner comprising the steps of:
- connecting the portable data storage device 1, comprising a mass memory 2, to a communication port of a computer, for example a USB port;
- inserting an access key into the access authorization circuit 5 to enable access to the microprocessor 3;
- executing a program for the protection of data, for example of the type having a password, which requests the user, using the screen and the keyboard of the computer to which the portable data storage device 1 is connected, a password for access to the mass memory 2 or to a protected portion thereof;
- only after a correctly enabling through the access key and the received password, make the portable data storage device 1 normally available for reading and writing.

In an alternative embodiment, the portable data storage device 1 may also have an auxiliary communication port, in particular a USB port, capable of providing a quick data transmission towards the portable data storage device 1 also without connection to a computer. In this case it should be provided for that the portable data storage device 1 be connected to a source of power supply and that, upon inserting a USB pen drive, for example, in the auxiliary communication port, the portable data storage device 1 automatically gathers the data contained therein and, possibly, subsequently deletes it from the source medium, the control of the data transfer being however subject to the presence of the access key, for example a transponder key for enabling the portable data storage device 1.

Suitably, in order to avoid any displaying of the data contained in the mass memory 2 or in a protected portion thereof, before transferring the data into the protected area the same are stored in the microprocessor 3 and only upon removing the source medium, in particular the USB pen drive, the data are transferred to the safe unreadable area. The portable data storage device 1 can also be configured so that, upon inserting the USB pen drive, the data are transferred therefrom to the mass memory 2 or to the protected portion thereof one file at a time, so as not to require temporary storage thereof, and, at the end of the copying operation, the portable data storage device 1 also provides for the deletion of the files transferred from the USB pen drive. In this case, it may be provided for that if the copying of a file is not completed, for example due to the removal of the USB pen drive from the portable data storage device 1, the corresponding file is removed from the mass memory 2 or from the protected portion thereof and possibly the entire copying process is interrupted, possibly also disabling the access to the portable data storage device 1.

Also in this case, signalling of the different steps of transferring data from an external medium could be provided by means of luminous leds of the signalling block 8 of the portable data storage device 1. The following sequence may be considered by way of example:
- a red led, when the source medium, in particular a USB pen drive, is inserted;
- a yellow led, when downloading data from the USB pen drive; and
- a green led, when the transfer operation is completed. Such green led will go off then when extracting the external support or USB pen drive.

At this point a re-lighting of the yellow led is provided up to the uploading the data in the protected area, this yellow led subsequently going off when the operation is concluded.

In conclusion, the portable data storage device 1 according to the invention allows safely storing sensitive data, allowing access thereto solely due to a combination of hardware (electronic/mechanical access key) and software (program for the protection of data, for example having a password) solutions.

In particular, advantageously according to the invention, the portable data storage device allows the data transfer solely by controlling the microprocessor which regulates the communication between a connection interface and the mass memory or a protected portion thereof where the data are safely stored.

The portable data storage device also comprises various anti-tampering solutions, such as against the mechanical opening or drilling of the container or case thereof, as well as heating or cooling the entire device and also in case of interruption of its power supply.

Obviously the device described above may be subjected, by a man skilled in the art with the aim of meeting the contingent and specific needs, to various modifications and variants, all falling within the scope of protection of the invention as defined by the claims that follow.

## Claims

1. Portable data storage device (1) comprising at least one mass memory (2) and a connection interface (4) with the outside, **characterized in that** it comprises at least one microprocessor (3) connected to said mass memory (2) for the management of communications with said mass memory (2) or with at least a protected portion thereof and to said connection interface (4), as well as at least one access authorization circuit (5) in turn connected to said microprocessor (3) and associated with an access key of said portable data storage device (1), said microprocessor (3) also comprising a program for the protection of data, data transmissions to and from said mass memory (2) or its protected portion being under the total control of said microprocessor (3), in turn activated through said access authorization circuit (5) and authorized by said program for the protection of data so as to make said portable data storage device (1) normally available for reading and/or writing.

2. Portable data storage device (1) according to claim 1, **characterized in that** said access authorization circuit (5) is associated with an access key of the electronic and/or mechanical type.

3. Portable data storage device (1) according to claim 1, **characterized in that** said program for the protection of data is of the type having a password, said password being entered by the user, by using the screen and the keyboard of a computer to which said portable data storage device (1) is connected.

4. Portable data storage device (1) according to claim 1, **characterized in that** said microprocessor (3) comprises a counter which takes into account the access attempts having been made and failed with said program for the protection of data and a locking system of the access to said mass memory (2) or to its protected portion after a predefined number of attempts.

5. Portable data storage device (1) according to claim 1, **characterized in that** it further comprises at least one system control block (6) coupled to a power supply block (7), in turn connected to a signalling block (8), also connected to said connection interface (4).

6. Portable data storage device (1) according to claim 5, **characterized in that** said power supply block (7) comprises at least a first and a second buffer battery (7A, 7B), said first buffer battery (7A) being capable of supplying said system control block (6) and maintain a control from said microprocessor (3) of the access to said mass memory (2) or its protected portion even in the absence of a connection with said second buffer battery (7B).

7. Portable data storage device (1) according to claim 5, **characterized in that** said signalling block (8) comprises at least one signalling LED, capable of emitting light signals of different colours and types, being indicative of different working conditions of said portable data storage device (1).

8. Portable data storage device (1) according to claim 1, **characterized in that** it further comprises a programmable input/output block (9) able to detect attempts of forced entry from the outside to said portable data storage device (1).

9. Portable data storage device (1) according to claim 8, **characterized in that** said programmable input/output block (9) comprises a system for controlling the temperature and a heater capable of preventing a misuse of the safety mechanism that is carried out by freezing or by heating said portable data storage device (1), said system for controlling the temperature carrying out a block of said portable data storage device (1) in the event of exceeding a range of safety by the temperature.

10. Portable data storage device (1) according to claim 1, **characterized in that** it comprises a suitable case (11) with anti-tamper mechanism.
